**Europäisches Patentamt**

**European Patent Office**

**Office européen des brevets**

(19)

(11) **EP 1 415 707 A1**

(12) # EUROPEAN PATENT APPLICATION

(43) Date of publication:
06.05.2004 Bulletin 2004/19

(51) Int Cl.7: **B01J 19/00**

(21) Application number: **02292689.3**

(22) Date of filing: **29.10.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **Corning Incorporated**<br>**Corning, New York 14831 (US)**<br><br>(72) Inventors:<br> • **Barthe, Philippe J.**<br>  **77130 Ville Saint Jacques (FR)** | • **Letourneur, Didier H.**<br> **77210 Samoreau (FR)**<br> • **Themont, Jean-Pierre**<br>  **77690 Montigny sur Loing (FR)**<br> • **Woehl, Pierre**<br>  **77240 Cesson (FR)**<br><br>(74) Representative: **Le Roux, Martine et al**<br> **Cabinet Beau de Loménie**<br> **158, rue de l'Université**<br> **75340 Paris Cédex 07 (FR)** |

(54) **Method and microfluidic reactor for photocatalysis**

(57)    A microfluidic reactor is disclosed. The microfluidic reactor includes at least one reaction cell (12) for a photocatalytic reaction. The at least one reaction cell includes at least one channel (14) having an inlet port, an outlet port and a surface (20) transparent to actinic radiation. A photoactive catalyst (22) is disposed within the at least one channel (14). A method of performing a reaction in a microfluidic reactor and a microfluidic reaction system are also disclosed.

*FIG. 1*

Printed by Jouve, 75001 PARIS (FR)

Description

BACKGROUND OF THE INVENTION

1. FIELD OF THE INVENTION

The present invention generally relates to microfluidic reactors, and more particularly, to a transparent microfluidic reactor for photocatalytic reactions between at least one photoactive catalyst and at least one reactant within a microchannel.

While the present invention is subject to a wide range of applications, it is particularly well suited for water detoxification, gaseous pollutant removal and other remediation of hazaradous wastes from air, water and soil, as well as other oxidation and reduction reactions.

2. TECHNICAL BACKGROUND

The civilian, commercial, and defense sectors of most advanced industrialized nations have been and will continue to be faced with significant environmental problems related to the remediation of hazaradous wastes, contaminated ground waters, and the control of toxic air contaminates. For example, the slow pace of hazaradous waste remediation at military installations around the world is causing a significant delay in conversion of many of these facilities to civilian uses.

Problems associated with hazaradous waste at military installations, for example, are related in part to the disposal of chemical waste in lagoons, underground storage tanks, and dump sites. As a consequence of these disposal practices the surrounding soil and underlying ground water aquafers have become contaminated with a variety of hazaradous (i.e. toxic) chemicals. Typical wastes of concern include heavy metals, aviation fuel, military-vehicle fuel, solvents and degreasing agents, and chemical bi-products from weapons manufacturing. Projected costs for cleanup at more than 1800 military installations in the United States alone are estimated at approximately $30 billion dollars, and the projected cleanup time is estimated at more than 10 years.

In order to achieve efficient chemical processing for such tasks as hazaradous waste remediation, for example, it is generally necessary to precisely control a number of processing parameters, such as temperature, pressure, mixing conditions, exposure of reactants to catalyst material, and exposure of reactants to actinic radiation, as well as conditions to achieve separation of the reaction products.

Chemical reactors are widely used in industry to carry out reactions between two or more chemical components, for example, between liquids and liquids, gases and gases, slurries and slurries, liquids and gases, liquids and slurries, gases and slurries, solids and solids, solids and liquids, solids and gases and solids and slurries. Many of these reactors are large, fixed-site units designed for continuous operation at roughly constant throughput. These reactors typically have a conventional shell-and-tube design wherein reactants pass through catalyst-containing tubes while heat, usually in the form of hot gases contained within the shell, is applied to the outside of the tube.

A major drawback to shell-and-tube type reactors in general is the size of the reactors themselves. Their relatively large size makes these reactors less desirable for use in applications requiring a more compact reactor. These and other conventional processing equipment also suffer from additional disadvantages. It has long been recognized in the chemical industry that "scale-up" from laboratory bench scale to commercial production scale is difficult. Results achieved in the laboratory are often difficult at production rates in production facilities. The conventional wisdom of "economy of scale" is based upon economic considerations which relate production rate (units of production per unit of time) to capital investment. This conventional approach results in less than optimum precision of control of chemical processing.

Conventional chemical processing equipment typically holds a relatively large volume of materials and consequently has a relatively large volume to surface area ratio. It is therefore likely that different portions of the reactant materials contained within such equipment are exposed to different histories of conditions. In the case of a conventional tank reactor, for example, even when temperature conditions at the walls of the reactor are well controlled, the portions of the reactants that are not in close proximity to the walls of the reactor may experience different temperature histories, especially if a significant temperature gradient exists, which might occur if the chemical reaction is strongly exothermic. Rapid stirring of the reactants may reduce this temperature history difference, but will not eliminate it. As a result of the nonhomogeneous temperature history, different portions of the reactants may chemically react differently. Undesired reactions may occur in portions of the reactants that are exposed to histories of higher than desired temperatures. This may result in the production of undesired waste products, rather than the remediation of hazaradous waste. In extreme situations, reaction rates may accelerate to uncontrollable levels, which may cause safety hazards, such as potential explosions.

Mixers, such as continuous mixers and batch mixers have been employed in such chemical reactors in an attempt to overcome such shortcomings, but with limited success. Generally speaking, excess reagent is often required to compensate for the inefficiency of the mixing and to achieve as much contact between the molecules of the components as possible. Thus, the inefficiency of continuous mixers results in additional costs associated with the use of excess reagent as well as the use of energy to operate the mixer. Among other shortcomings, batch mixing may be relatively slow, and the mixers tend to operate inefficiently.

A variety of photochemical reactor configurations have also been employed. Most often in the laboratory experiments, well-mixed heterogeneous batch reactors have been employed. In slurry reactors, the semiconductor particles must be separated from the bulk liquid phase after treatment by filtration, centrifugation, or coagulation and flocculation. These added steps add various levels of complexity to an overall treatment process and clearly decrease the economic viability of slurry reactors.

Alternative reactor configurations include either fluidized or fixed-bed reactors. These fixed-bed reactors are particularly well suited for semiconductor photocatalysis.

In most practical applications of semiconductor photocatalysis, fixed-bed reactor configurations with immobolized particles or semiconductor ceramic membranes may be required. A fixed-bed reactor system allows for the continuous use of the photocatalysts for processing of aqueous- or gas-phase effluents while eliminating the need for post-process filtration coupled with particle recovery and catalyst regeneration. In typical fixed-bed photocatalytic reactors, the photocatalyst is coated on the walls of the reactor, on a solid-supported matrix, or around the casing of the light source. These reactors, however, have several drawbacks. Most notable are the low surface area-to-volume ratios and inefficiencies introduced by absorption and scattering of light by the reaction median. In terms of future applications for semiconductor photocatalysis, a major concern appears to be the non-linear dependence of rate (or quantum efficiency) on light intensity for many degradation reactions.

What is needed therefore but seemingly unavailable in the art, is a more efficient, and thus less costly approach to chemical and catalytic reactions that is particularly well suited for hazaradous waste remediation. Such a novel device, system and method should improve upon known semiconductor photocatalysis applications and should be performed on a micro-scale. Such a device and system should provide adequate controls for the photocatalytic reactions occurring therein, and provide a high surface-to-volume ratio to provide for adequate interaction between the actinic radiation and the selected photoactive catalyst. The device and system may preferably be utilized to generate value added products from base chemicals, for example, to produce cyclohexanol from cyclohexane or cyclohexanome from cyclohexane, and/or to perform hazardous waste remediation. It is to the provision of such a device, system and method that the present invention is primarily directed.

## SUMMARY OF THE INVENTION

In one aspect, the present invention is directed to a microfluidic reactor. The microfluidic reactor includes at least one reaction cell for a photocatalytic reaction. The reaction cell includes at least one channel having an inlet port, an outlet port, and a surface transparent to actinic radiation, and a photoactive catalyst disposed within the at least one channel.

Another aspect of the present invention relates to a method of performing a reaction in a microfluidic reactor. The method includes the steps of introducing a reactant into a reactor cell channel housing a photoactive catalyst, and exposing the photoactive catalyst to actinic radiation while the reactant is in communication with the photoactive catalyst within the reaction cell channel.

In many reactions involving photoactive catalysts, such as oxidation reactions, introducing a gas simultaneously with a liquid reactant into the reaction cell channel leads to significant increase in reactor performance. In such multiphase flows, the gas to liquid mass transfer rates can easily be enhanced by operating the reactor in particular flow regimes, such as, but not limited to, Taylor flow. Establishing such a flow regime in a reaction cell channel can easily be achieved in microfluidic reactors of the present invention, due, at least in part, to the relatively simple, generally tortuous microchannels formed in such structures.

Yet another aspect of the present invention is directed to a microfluidic reactor system. The microfluidic reactor system includes at least one reaction cell for a photocatalytic reaction. The at least one reaction cell includes at least one channel having an inlet port, an outlet port, and a surface transparent to actinic radiation. A photoactive catalyst is disposed within the at least one channel and a source of actinic radiation is positioned with respect to the reaction cell to communicate with the photoactive catalyst through the surface.

The microfluidic reactor and method of the present invention provides a number of advantages over other reactors and methods known in the art. For example, the micro-scale internal dimensions of the reaction channel of the present invention provides a high surface-to-volume ratio, which in turn, maximizes reactant(s)/catalyst(s) contact and catalytic exposure to actinic radiation within the reaction channel. As a result there is increased productivity or yield for the same quantity of actinic radiation. Generally speaking, reactor performance may be significantly improved, due in large part to the increased exposure of a photocactive material, such as $TiO_2$, to actinic radiation.

The small size of the channel also provides greater control over variables such as temperature control and flow rates. Moreover, the gas/liquid, liquid/liquid, and liquid/solid mass transfer coefficients may be greatly enhanced due to the flow regime control provided inside the narrow reaction channel.

Additional features and advantages of the invention will be set forth in the detailed description which follows and in part will be readily apparent to those skilled in the art from that description or recognized by practicing the invention as described herein.

It is to be understood that both the foregoing general description and the following detailed description are merely exemplary of the invention, and are intended to provide an overview or framework for understanding the nature and character of the invention as it is claimed. The accompanying drawings are included to provide further understanding of the invention, illustrate various embodiments of the invention, and together with the description serve to explain the principles and operation of the invention.

## BRIEF DESCRIPTION OF THE DRAWINGS

FIG. 1 is a top view of a preferred transparent microfluidic reactor in accordance with a first preferred embodiment of the present invention.

FIG. 2 is a cross-sectional view of the transparent microfluidic reactor taken along lines 2--2 of Fig. 1.

FIG. 3 is a photomicrograph depicting a transparent microfluidic reactor in accordance with a second preferred embodiment of the present invention.

FIG. 4A is a cross-sectional view of a portion of a microfluidic reactor in accordance with the present invention showing a preferred channel wall design and preferred positioning of a photoactive catalyst on the interior walls of the channel.

FIG. 4B is a cross-sectional view of a portion of a microfluidic reactor showing the interior wall of a channel having increased surface area in accordance with one aspect of the present invention.

FIG. 5 is a cross-sectional view of a first preferred microfluidic reactor system in accordance with the present invention.

FIG. 6 is a cross-sectional view of a second preferred microfluidic reactor system in accordance with the present invention.

FIG. 7 schematically illustrates a preferred method of manufacturing a microfluidic reactor in accordance with another aspect of the present invention.

FIG. 8 is a cross-sectional view illustrating a preferred alternative method step for closing the microfluidic reactor in accordance with the method of the present invention illustrated in Fig. 7.

FIG. 9A is a cross-sectional view illustrating an alternative approach for attaching a transparent surface to the microfluidic reactor in accordance with the present invention.

FIG. 9B is a cross-sectional view illustrating an additional alternative approach for attaching a transparent surface to the microfluidic reactor in accordance with the present invention.

## DETAILED DESCRIPTION OF THE PREFERRED EMBODIMENTS

The present invention is broadly directed to a microfluidic reactor transparent to actinic radiation. Such a microfluidic reactor is particularly well suited for facilitating highly efficient photocatalytic reactions within a channel formed within the microfluidic reactor. While such a microfluidic reactor may preferably include a single reaction cell, a plurality of reaction cells may be stacked or otherwise arranged in accordance with the present invention to increase reactor activity, fluid throughput through such a microfluidic reactor, and thus the volume of reactants processed in accordance with the present invention.

A microfluidic reactor system in accordance with the present invention may also include a support structure for retaining the various components of the system, various flow control components, mixing devices, thermal controls, sensing units, separation chambers, analyzing chambers, monitoring chambers, other types of reaction chambers, and any other components or devices typically associated with microfluidic chemical processing apparatus and systems known in the art.

Although photocatalysis has been exhaustively researched, cost effective and efficient commercially available photocatalytic reactors for uses such as hazardous waste remediation of soil, water, and/or air have yet to be realized. Generally speaking, such photocatalytic reactors have been developed on a macro-scale and thus have large volume-to-surface area ratios. As a result, catalyst/ actinic radiation interaction is limited as are the photocatalytic reactions between the reactant and the photo-activated catalyst within such devices and systems.

In accordance with the present invention, photocatalysis is applied on a micro-scale. Microfluidic reactors may now be manufactured to include or be fitted with a surface transparent to actinic radiation, which enables photocatalysis within the micro-scale channel or channels of a microfluidic reactor. Because the channels of such a microfluidic reactor are so small, the surface-to-volume ratio within such channels are extremely high. When one or more catalyst(s) are disposed within such a channel in accordance with the present invention, there is a significant increase in reactant exposure to the catalyst as well as increased exposure of the catalyst to actinic radiation, which together result in greater productivity or yield as a result of the ensuing photocatalytic reaction.

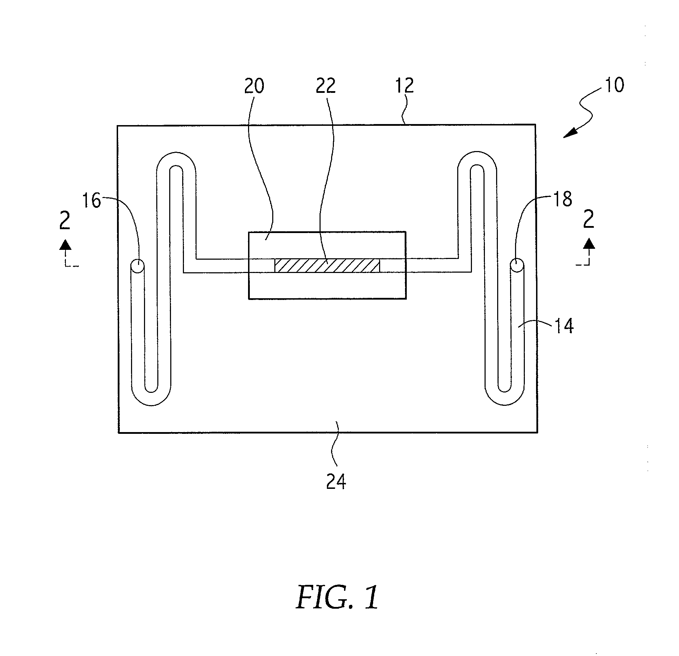

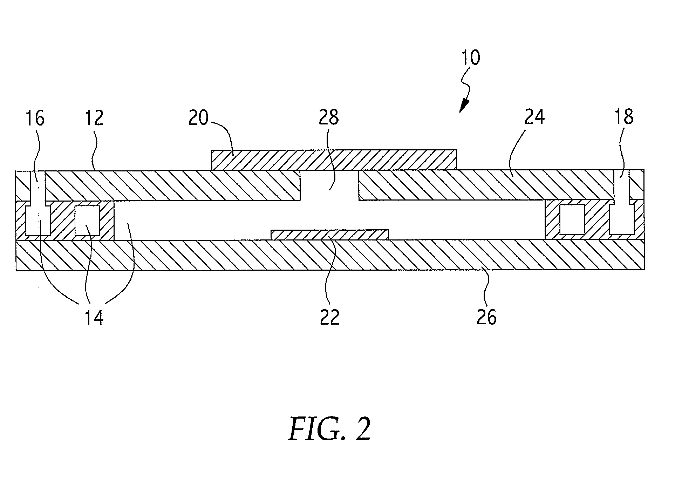

Reference will now be made in detail to the present preferred embodiments of the present invention, examples of which are illustrated in the accompanying drawing figures. Wherever possible, the same reference numerals will be used throughout the drawings to refer to the same or like parts. An exemplary embodiment of the microfluidic reactor of the present invention is shown in Figs. 1 and 2 and is designated generally throughout by reference numeral 10.

Generally speaking, and as depicted in Fig. 1, photocatalytic microfluidic reactor 10 of the present invention preferably includes at least one reaction cell 12 for performing photocatalysis on a micro-scale. Reaction cell 12 may preferably include at least one channel 14 having an input port 16 and an output port 18 for the passage of a reactant therethrough, and a transparent surface 20 that permits desired actinic radiation to pass into channel 14. A photoactive catalyst 22 is preferably disposed within channel 14 such that photoactive catalyst 22 may be photoactivated by the actinic radiation passed through transparent surface 20.

Generally speaking, and as will be described in greater detail below with reference to the method of manufacturing a microfluidic reactor in accordance with the present invention, channel 14 is preferably disposed between a first substrate 24 and a second substrate 26. As shown in Fig. 2, first substrate 24 may be drilled or otherwise fashioned to include a bore 28 prior to seating transparent surface 20 on first substrate 24. In addition, and although not required, channel 14 is preferably a tortuous channel, which may preferably provide static mixing functionality within reaction cell 12.

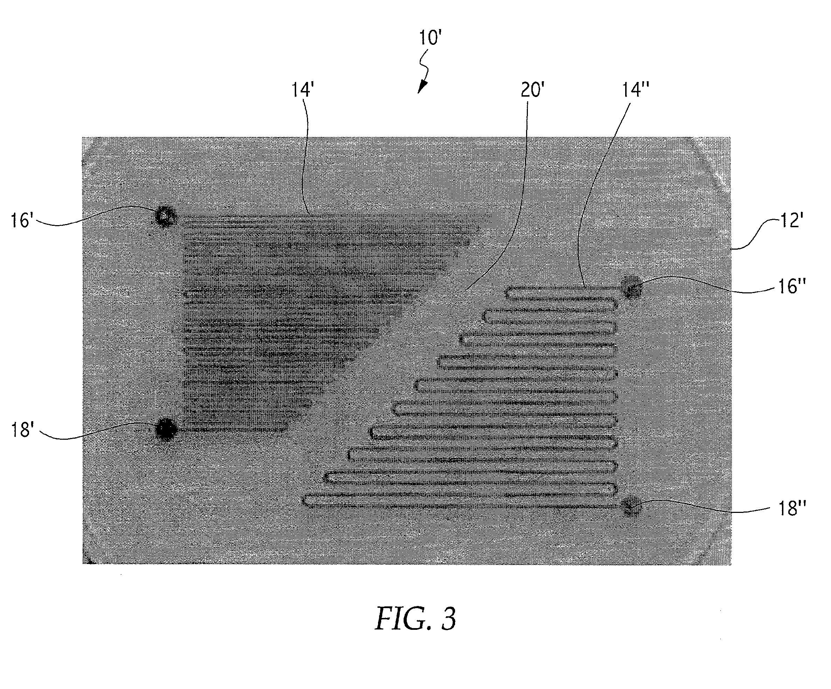

An alternative microfluidic reactor 10', formed of a single reaction, cell 12' is depicted in Fig. 3 and may preferably include a plurality of channels 14' and 14", each including inlet ports 16' and 16", respectively and outlet ports 18' and 18", respectively. In accordance with the operation of the present invention, each channel 14' and 14" preferably includes a transparent surface 20' (not visible) for facilitating photocatalytic reactions within channels 14' and 14". If desired, one of channels 14' and 14" may serve as a reaction channel while the other may be utilized for some other process such as, but not limited to, thermal control.

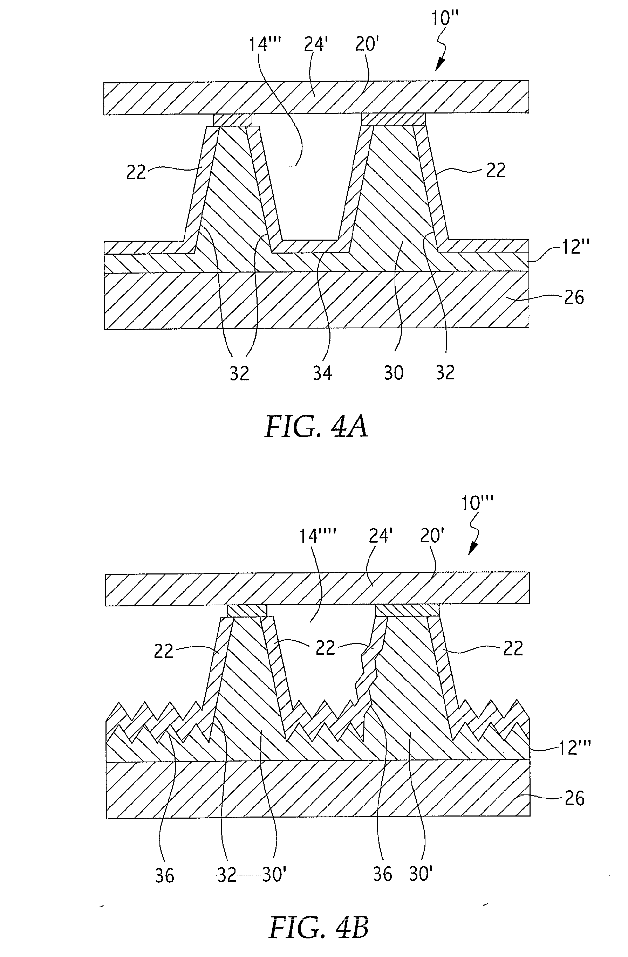

A reaction cell 12" of a preferred microfluidic reactor 10" incorporating a preferred channel 14''' design is shown in Fig. 4A. As shown in detail, channel 14''' is defined by a plurality of channel walls 30 and a first substrate 24', which in this case is a transparent surface 20'. Here, however, channel walls 30 include slanted surfaces 32. As shown in the drawing figure, bottom surface 34 is substantially parallel to transparent surface 20'. Unlike the embodiments described above, in which the sides of the channel form right angles with the bottom surface of the channel, the side surfaces or slanted surfaces 32 depicted in Fig. 4A are arranged at angles greater than 90° with respect to bottom surface 34. Although not required, such an arrangement facilitates increased exposure of photoactive catalyst 22 to actinic radiation passing through transparent surface 20', thereby increasing photocatatylic activity.

Although photoactive catalyst 22 may be disposed within channel 14''' in a number of ways, such as by depositing a bed of pellets within channel 14''', it is preferable that photoactive catalyst 22 be deposited directly on the channel walls 30. A preferred deposition technique for depositing photoactive catalyst 22 on the walls 30 of channel 14''' is a conventional "sputtering" technique.

An alternative reaction cell 12''' of a microfluidic reactor 10''' is shown in Fig. 4B. In addition to slanted surfaces 32, walls 30' of channels 14'''' include jagged or rough surfaces 36. Among other benefits, jagged surfaces 36 provide additional surface area for the deposition of photoactive catalyst 22. As a result of the increased surface area, increased amounts of photoactive catalyst 22 may be deposited on the walls 30' of channel 14'''', which in turn results in additional photoactive catalyst 22 for exposure to actinic radiation.

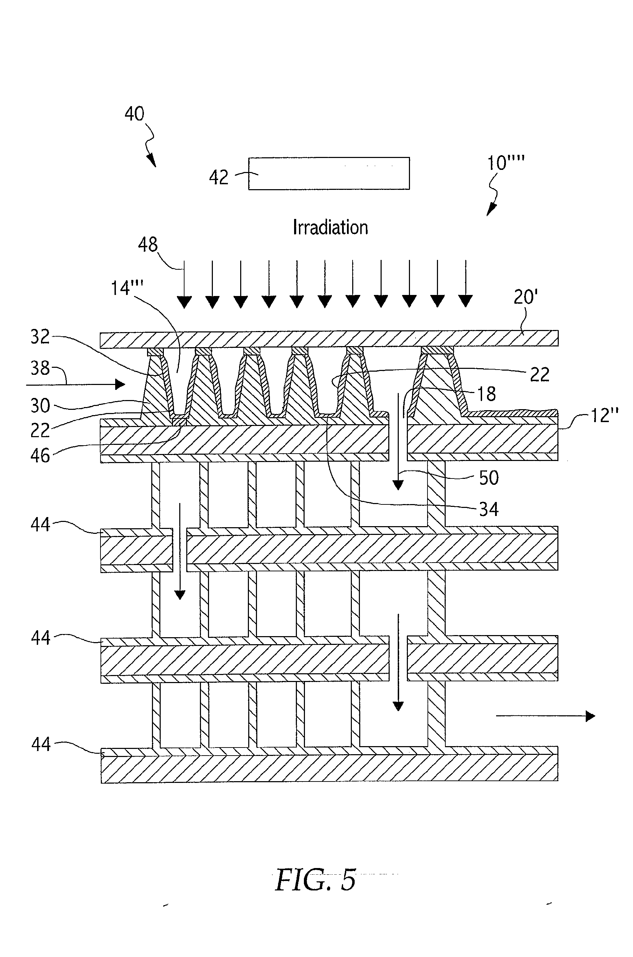

In operation and as shown in Fig. 5, a reactant 38 is preferably introduced through the inlet port (not shown) and is preferably continuously passed through channel 14''' formed within reaction cell 12" of microfluidic reactor 10''''. As shown in Fig. 5, microfluidic reactor 10'''' forms a part of a microfluidic reactor system 40, which includes microfluidic reactor 10'''', the components of which have been described hereinabove, and a radiation source 42 such as a source of visible light, or an ultraviolet (UV) light source, to name a few. As shown, system 40 also includes a plurality of additional cells 44 wherein operations such as, but not limited to sensing, analyzing, and separating may occur. Also included in system 40 is a heating element 46 which may preferably serve as a temperature control mechanism for reaction cell 12".

Turning now to the operation of the present invention, as reactant 38 is preferably pumped through channel 14''', radiation source 42 emits actinic radiation 48 which passes through transparent surface 20' and falls upon photoactive catalyst 22 residing on the slanted surfaces 32 and bottom surface 34 of channel walls 30. As a result, a photocatalytic reaction preferably occurs within channel 14''' and the reaction product or products 50 is thereafter passed through outlet port 18 where it may preferably be further processed and/or analyzed as product 50 continues to flow through additional cells 44 in the reactor system 40.

In accordance with the operation of the present invention, semiconductors such as, but not limited to, $TiO_2$, $ZnO$, $Fe_2O_2$, $CdS$, $CaSe$, $WO_3$, $SrTiO_3$ and $ZnS$ may preferably form a photoactive catalyst 22 in accordance with the present invention. Generally speaking, a preferred photoactive catalyst 22 is $TiO_2$, as it has been shown to be a durable photocatalyst particularly well suited for all types of hazaradous waste remediation. More preferably, titanium dioxide in the anatase form has been shown to be the most photoactive and practical semiconductor for widespread environmental applications such as water purification, waste treatment, hazaradous waste control, air purification, and water dissinfection. Those skilled in the art will recognize, however, that $TiO_2$ or other photocatalysts in the rutile phase are also operative in accordance with the present invention. The semiconductors mentioned above, among other photocatalysts, can act as sanitizers for light-reduced redox processes due to their electronic structure, which is characterized by a filled valence band and an empty conduction band. When a photon with an energy of $h\nu$ matches or exceeds the bandgap energy, $E_g$, of the semiconductor, and electron, $e_{cb}-$, is promoted from the valence band, VB, into the conduction band, CB, leaving a hole, $h_{vb}+$ behind. Excited-state conduction-band electrons and valence-band holes can recombine and dissipate the input energy as heat, get trapped in metastable surface states, or react with the electron donors and electron acceptors absorbed on the semiconductor surface or within the surrounding electrical double layer of the charged particles.

In the absence of suitable electron and hole scavengers, the stored energy is dissipated within a few nanoseconds by recombination. If a suitable scavenger or surface defect state is available to trap the electron or hole, recombination is prevented and subsequent redox reactions may occur. Generally speaking the valence-band holes are powerful oxidants while the conduction-band electrons are good reductants.

One of skill in the art will recognize that the relationship between radiation and a given photocatalyst is based upon the following variables:

$E_{bg}$    $E_{bg}$ is the band gap energy for the photocatalyst

$E=h\nu$    E is the energy associated with the radiation
h is Plancks constant equal to $6.626176 \times 10^{-34}$ Js
$\nu$ is the frequency of the radiation

$\lambda = c/\nu$    $\lambda$ is the wavelength of the radiation
c is the speed of light in vacuum $3 \times 10^8$ m/s

For a photocatalyst to be able to generate photocatalytic activity, energy from the radiation must be at least equal to the band gap energy of the photocatalytic material. Accordingly, knowing the band gap energy of a given photocatalyst, one can easily solve for the wavelength ($\lambda$) necessary to activate the photocatalyst using the following equations:

$$h\nu > E_{bg}$$

$$\nu = c/\lambda$$

$$hc/\lambda, > E_{bg}$$

$$\lambda < hc/E_{bg}$$

In the case of $TiO_2$, the band gap energy is approximately 3.2 eV. Knowing that 1 eV is $1.60218 \times 10^{-19}$ J, we can solve for $\lambda < 6.626176 \times 10^{-34} * 3 \times 10^8 / (3.2 * 1.60218 \times 10^{-19})$. Solving this equation provides the upper acceptable wavelength range limit of:

$$\lambda < 3.877 \times 10^{-7} m, \text{ or approximately, } \lambda < 388 \text{ nm}$$

Thus, in order to obtain photocatalytic activity using $TiO_2$ as a photocatalyst, the radiation spectrum must at least include as a part of its spectrum, a wavelength equal to or less than approximately 388 nm. Accordingly, UV radiation is preferred over visible light for the photoactivation of $TiO_2$. One of skill in the art will recognize, however, that $TiO_2$ as well as other photocatalysts may be promoted/modified so that it may become active under visible light. Generally speaking, an acceptable wavelength range for the operation of the present invention is from about 290 nm (the lowest wavelength passable through glass) up to about 750 nm which is the upper limit for the visible spectrum. Thus, any photocatalytic material with a band gap energy corresponding to this wavelength window may be able to generate photocatalytic activity in accordance with the present invention. Stated differently, any material with a band gap energy equal to or less than 4.3 eV may be operable in accordance with the present invention.

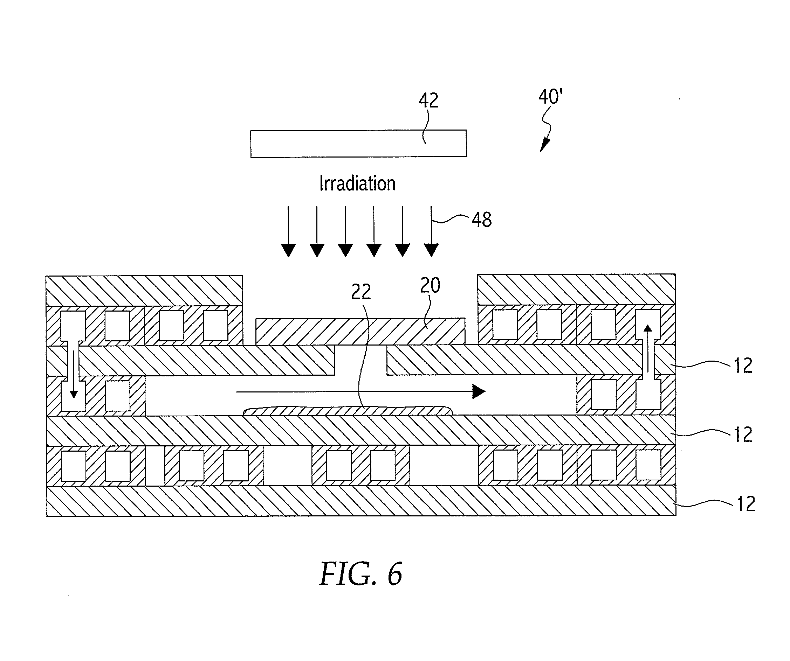

An alternative microfluidic reactor system 40' is shown in Fig. 6. While the operation of system 40' is essentially the same as that disclosed with reference to Fig. 5 above, system 40' demonstrates that it is possible to incorporate transparent surface 20 within an intermediate layer of stacked reaction cells 12 in accordance with the present invention, provided sufficient actinic radiation 48 can reach photoactive catalyst 22.

A preferred method of manufacturing microfluidic reactors 10, 10', 10", 10''', and 10'''', such as those described above, and having at least one reaction cell 12, 12', 12", 12''' preferably includes the steps of, forming, under a vacuum (to avoid trapping any bubbles of gas), a first mixture of an organic medium and a material that is a precursor for glass, glass ceramic, ceramic, or a combination thereof, on a first substrate made of a material selected from glasses, glass ceramics, ceramics, metals, semiconductors such as silicon or combinations thereof. The precursor material concerned is preferably compatible in terms of thermal expansion coefficient with the material constituting the first substrate. The vacuum-forming is preferably implemented under conditions which confer at least a minimum amount of mechanical strength to the shapes generated.

The formed mixture is then preferably presintered by applying appropriate heat treatment to the assembly including the first substrate and the formed mixture (the presintering serves to eliminate the organic medium and to consolidate the structure). A second substrate made of a material selected from glasses, glass ceramics, ceramics, metals, semiconductors such as silicon or combinations thereof is then preferably applied, which material may be identical or different from that of the first substrate, the material being compatible in terms of thermal expansion coefficient with substantially all of the precursor materials with which it may come into contact. The second substrate being involved may be either untreated, coated on one of its faces with a second mixture of a thermoplastic medium and a material that is a precursor for glass, glass ceramic, ceramic, or a combination thereof, which mixture is optionally identical to that used on the first substrate, is not vacuum-formed, is optionally presintered, and in any event is compatible with the second substrate and with the first mixture, or indeed coated on one its faces with such a second mixture which has previously been vacuum-formed and presintered in succession. The two substrates may then be assembled together such that the mixtures optionally present on each of the substrates face each other. Although not required, the above operations may optionally be repeated at least once either identically or with variations concerning the nature of the second substrate, using the assembly that has already been obtained as the bottom or top portion of a structure that includes, in succession, two, three, and/or more cells. The resulting assembly, having one or more cells, may then be heat treated (fired) so as to bond together the precursor material(s) and the substrates, or so as to bond the different precursor materials together and to each of the substrates on which they have been deposited.

The vacuum-forming may be implemented in various different ways, in particular taking account of the nature of the organic medium mixed in the precursor material. The organic medium in the mixture can be constituted, in particular, by a thermoplastic medium, a thermosetting medium, or a photopolymerizable medium.

Generally speaking, the method may be initiated in one or more of the following ways. The first mixture may be placed on the first substrate prior to application of the mold in the forming operation (in a vacuum enclosure) or the mold may initially be placed on the first substrate, a vacuum established, and then the mixture injected therein. If a thermoplastic medium is used in the mixture, then the mixture may preferably be initially heated, shaped with an appropriate mold, and allowed to cool, after which the mold may be removed. If the medium is a thermosetting medium, then the mixture may be formed at ambient temperature with an appropriate mold, heated once it has been formed, cooled, and then the mold may be removed. If the medium is a photopolymerizable medium, then the mixture may be formed at ambient temperature with an appropriate mold. Once it has been formed, it may be exposed to appropriate radiation (light, X-rays), after which the mold may be removed. As one of skill in the art will recognize, molds used may be prepared and adapted to the desired final shape from suitable master molds, in conventional manner.

Vacuum-forming generates shapes in relief in the mixture of precursor medium and organic material. In characteristic manner, according to the invention, the shapes are obtained by deforming the mixture while it is supported on a substrate. The substrate is preferably not subjected to any etching.

Since the presintering is preferably performed on a structure that is supported, it is simple to perform and the structure retains its planeness. Presintering serves to eliminate a major portion of the organic components from the mixture prior to assembly (prior to closing the structure). Eliminating volatile components from a complex three-dimensional structure is always difficult, since the gases must be able to escape without damaging the structure. The use of substrates made of glass, glass ceramic, ceramic, metal, or semiconductor is particularly advantageous in that, sub-structures can be formed easily without the need to produce and handle such sub-structures in a self-supporting configuration, which would be fragile. The structures do not sag or become distorted, thus making it possible to provide channel walls that are far apart and/or wall shapes that are complex, and it is easy to introduce additional parts such as electrical conductors, electrodes, or light conductors on the substrates with the mechanical behavior of the parts being minimally affected and in many cases, unaffected.

In conventional manner, presintering is generally implemented after a material that is inert relative to the precursor material, and that absorbs the organic medium, has been applied to the formed mixture. This minimizes the extent to which the formed mixture may sag or collapse. The absorbent material is generally powdered or sprayed onto the formed mixture for presintering.

When operations are not repeated, the method of the invention makes it possible to provide a single cell device (by assembling together first and second substrates; one of the substrates then acts as a bottom while the other acts as a cover plate). When operations are repeated, the method makes it possible to provide a device comprising $n$ cells, using one or more common substrates. Such one or $n$ cell devices can then be secured to one another by using a joining material, in particular an adhesive. Devices of the invention having one stage, $n$ cells with common substrates, $n$ stages stuck to one another (no common substrate), or $n$ cells, some of them having common substrates and some of them having no common substrate, can all be used in a vertical position, in a horizontal position, in an inclined position, or in some other orientation known in the art.

The method of the invention for obtaining any element of the final device can be implemented in three main variant manners according to the type of cover plate involved. As mentioned above, the second ($n$th) substrate can be applied to the presintered mixture of the first ($n-1$th) substrate, untreated, (although this variant is not preferred, it is certainly not excluded), coated with an optionally presintered second mixture, the second mixture is preferably in the form of a uniform layer that has not been shaped, it can optionally be presintered and if it has not been presintered, then contact with the presintered first mixture is improved, and coated with a second mixture that has been vacuum-formed and presintered (like the first mixture). This exemplary implementation is advantageously performed with the two substrates in alignment in order to take advantage of the complementary shapes formed as recesses or channels in the mixtures. This makes it possible in microfluidic reactors of the present invention to obtain significant aspect ratios, which ratios may be greater than about 5.0.

In addition to the steps described above, the method of the invention can include additional steps. Passages may be provided by drilling, for example, to allow fluid circulation, to allow such fluids to enter and leave, indeed to allow them to pass from a channel in one element to a channel in another element, or as will be described in greater detail below, to facilitate the addition of a transparent surface to the reactor cell in order to facilitate photocatalytic reactions within the microfluidic reactor. Drilling operations may also be performed on parts that are to be assembled together, advantageously through the presintered mixtures. In addition, one or more additional parts can be inserted, in particular, parts of the type specified above (electrical conductors, electrodes, light conductors, to name a few) on one of the substrates involved and/or in the precursor mixture involved, or indeed in an intermediate layer that is inserted between at least one of the first and second substrates and the corresponding first or second mixture. During manufacture of each of the elements of the device of the invention it is entirely possible to slide at least one intermediate layer (a fine layer of Si, a layer of glass, of ceramic, or glass ceramic) between a substrate and the precursor mixture for generating a portion of the reaction cell, in particular, electrodes that can be formed by conventional printing, photolithography, or electroforming techniques. Actions can also be taken on the inside surfaces of the channel in the reaction cell. This may be done for the purpose of depositing a catalyst, depositing a photoactive catalyst, laying a film, or laying a coating, for example. In other words, chemical or physical treatment can be applied to the surfaces which are to come into contact with the fluids or other reactants passed through the channel(s).

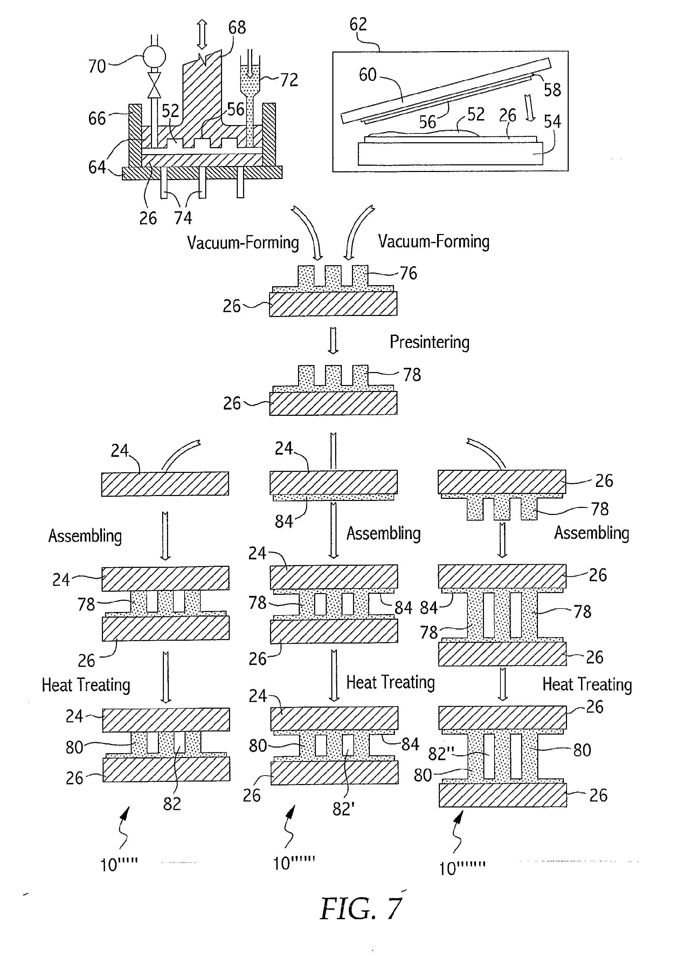

Exemplary embodiments of a method of manufacturing a microfluidic reactor in accordance with the present invention are shown in Fig. 7. Initially, and in a preferred embodiment, microstructures in relief are made on a substrate 26 (e.g. of glass or of silicon) with said microstructures being made by molding a mixture 52 including glass frit and a thermoplastic medium (for example). Two different techniques are shown diagrammatically. The technique in the upper right corner of Fig. 7 is similar to the technique described in U.S. Patent No. 5,853,446, and more particularly to the method described in Example 4 of that patent, the disclosure of which is hereby incorporated herein by reference. In accordance with the method, mixture 52 is deposited on the substrate 26. Substrate 26 carrying the mixture 52 is placed on a thermostatically controlled support 54. A suitable mold made of elastomer 56 is prepared in advance. The mold is positioned on a support 58, which is itself secured to a heater element 60. The assembly including elements 60, 58, and 56 is degassed in a vacuum inside the enclosure 62 prior to being applied to the mixture 52 in the enclosure. Such degassing preferably degasses the mixture 52 and prevents any bubbles of gas from being trapped in the formed mixture.

The method in the upper left corner of Fig. 7 is based on injecting mixture 52 into the mold 56 after it has been placed in advance on the substrate 26. The assembly including the substrate 26 and the mold 56 is positioned between two hot plates 64 inside a jacket 66 suitable for opening and closing under the action of a piston 68.

After the inside of the mold 56 has been evacuated by an evacuation mechanism 70, the mixture 52 is injected through an injector 72. At the end of the thermoforming process, the thermoformed assembly is ejected using ejector mechanism 74 acting through the bottom hot plate.

After the vacuum-forming step has been implemented, a mixture 76 is obtained that is secured to substrate 26, which mixture includes mixture 52 that has been thermoformed. The assembly is then subjected to heat treatment so that mixture 76 is presintered. It is then referenced 78 and consists mainly of heat-treated glass frit.

In parallel, a cover plate is prepared for the intended device. In a first embodiment, the cover plate includes a substrate 24 (optionally identical to substrate 26) which is placed untreated on mixture 78. The assembly is then subjected to heat treatment under suitable conditions to cause the three components of the resulting microfluidic reactor 10'''', i.e. the substrates 26 and 24 with the fired one-piece microstructure 80 between them, to be securely united. Generally speaking, the microstructure preferably defines at least one channel 82.

In a second embodiment, the cover plate includes a substrate 24 (optionally identical to the substrate 26) coated in a uniform layer of a mixture 84 of glass frit and a thermoplastic medium (for example). Mixture 84 is optionally presintered. It therefore optionally includes significant quantities of thermoplastic medium. The resulting assembly is subjected to heat treatment under appropriate conditions for generating a microfluidic reactor 10''''' in accordance with the invention. Its microstructure 80 plus 84 defines the channels 82'.

In a third embodiment, the cover plate is of the same type as the bottom plate. It includes a substrate (the same substrate as 26 in the example shown) having a presintered thermoformed mixture secured thereto (the same mixture 78 in the embodiment shown). Thus, by placing the patterns in relief so that they are in alignment with each other, it is possible to obtain channels 82'' of large volume (and presenting significant aspect ratios). The resulting assembly is subjected to heat treatment under suitable conditions to generate a microfluidic reactor 10'''''' of the present invention.

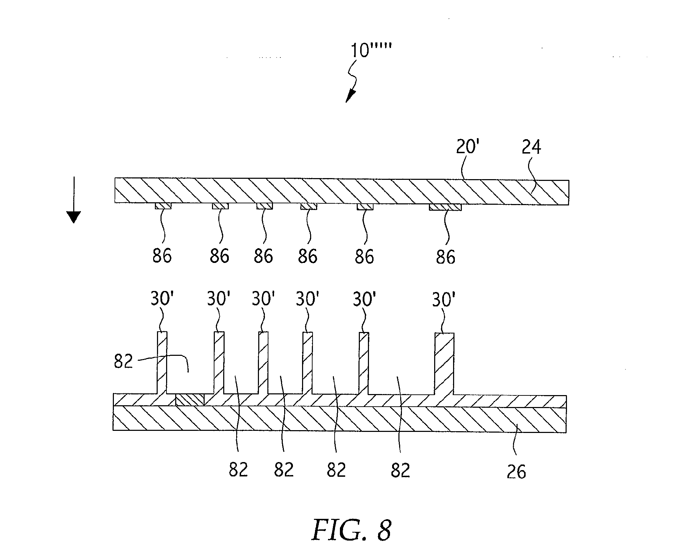

More preferably, and as shown in Fig. 8, the method depicted in Fig. 7 may be modified. Rather than utilizing the substrate 24 to cover and complete the formation of microfluidic reactor 10''''', a transparent surface 20' serves as a transparent substrate 24. Transparent surface 20', 24 is preferably made of a transparent material such as glass, quartz, silica, crystals, or ceramics. A non-uniform or discontinuous layer of paste 86 (mixture of glass frit and thermal plastic binder, for example) is preferably applied on one side of transparent surface 20', 24. In a preferred embodiment, paste 86 may preferably be applied to those regions of transparent surface 20', 24 that will face the walls 30' that partially define the channels that will be formed in the microfluidic reactor 10'''''. Paste 86 may be selectively applied on transparent surface 20', 24 by screen printing, for example. Once paste 86 has been properly applied, transparent surface 20', 24 is assembled onto the channel walls 30' such that the paste 86 adheres transparent surface 20', 24 to channel walls 30'.

The remainder of the manufacturing process may then be performed as described above with reference to Fig. 7. One of skill in the art will recognize that the coefficient of thermal dilation of transparent surface 20', second substrate 26, and channel walls 30' should preferably be substantially matched to facilitate adequate bonding. As a result of this alternative manufacturing process, all of the channel 82 may thus be exposed to UV radiation or other actinic radiation through transparent surface 20', 24.

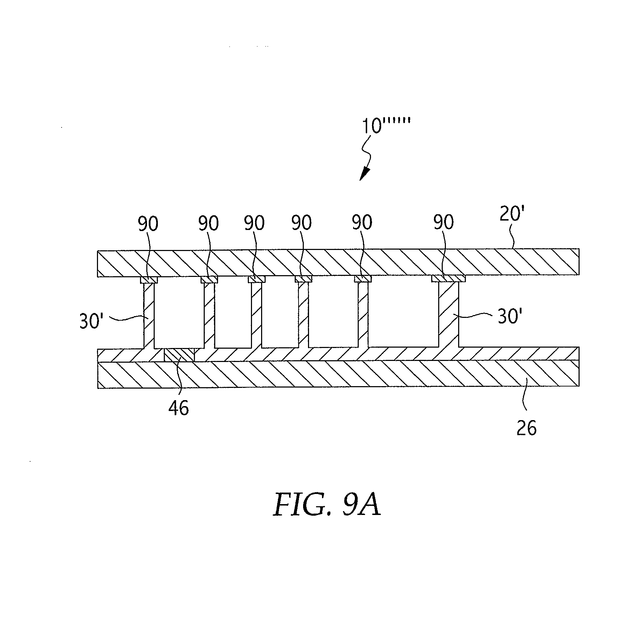

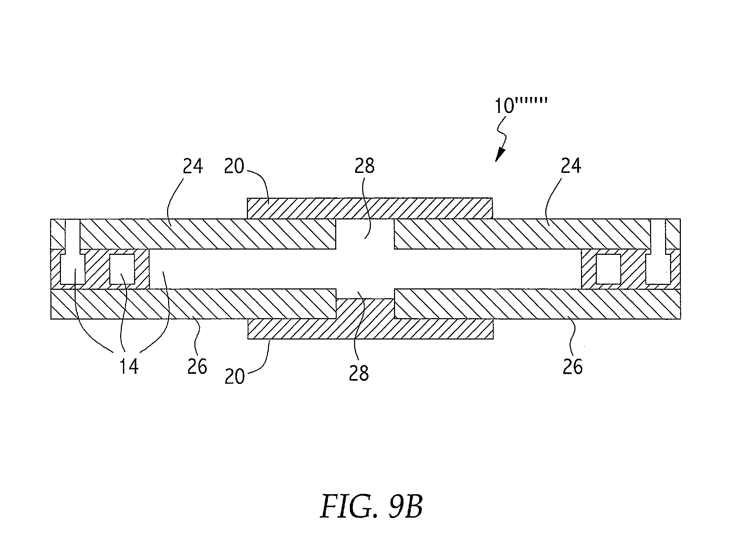

Alternatively and as shown in Fig. 9A, a microfluidic reactor 10''''' may be manufactured by bonding a transparent surface 20' to the channel walls 30' by applying an epoxy 90 or other sealing agent to the tops of channel walls 30'. Generally speaking, the manufacturing approach described with reference to Fig. 7 and Fig. 8 is followed. Rather than applying epoxy 90 to transparent surface 20', however, epoxy 90 is applied to the top of channel walls 30' with a roller or by some other technique known in the art such as, but not limited to, dipping. Although optional, a heating element 46, sensing element, or some other device may optionally be deposited on second substrate 26, either before the molding of channel walls 30' atop of second substrate 26, or at some other stage of the manufacturing process.

In yet another embodiment of the present invention, a microfluidic reactor 10'''''' may be manufactured following the approach described with reference to Fig. 7 above. In accordance with that method, a bore 28 may be drilled, hollowed, or otherwise disposed through first substrate 24, second substrate 26, or both after heat is applied to the binder, and before final assembly. Following fabrication of the microstructure, a transparent surface 20 may be bonded with an epoxy or some other sealing agent to the substrates 24, 26 such that transparent surfaces 20 cover the bores 28. As depicted in the drawing figure, one or more of transparent surfaces 20 may be shaped such that the spacing between upper transparent window 20 and the bottom of channel 14 is reduced. Generally speaking, bores 28 may be 0.1 mm in diameter or more and up to 80% of the substrates 24, 26 may be covered by transparent surfaces 20. In addition, this embodiment of the present invention is particularly well suited for detection operations such as, but not limited to, spectroscopy, colorimetry, and fluorimetry, and monitoring operations.

Further details relating to the method of manufacturing a microfluidic reactor in accordance with the present invention may be found in co-pending U.S. Non-provisional Application Serial No. 10/163,215, filed June 4, 2002, and commonly owned by Corning, Incorporated, which is hereby incorporated herein by reference.

## Example

The following example provides a comparison of liquid-phase photocatalysis conducted within a microfluidic reactor constructed in accordance with the present invention and the same reaction when conducted within a conventional batch reactor system. Liquid flow rate in the channel is determined based upon the desired conversion of the reactant. Achieved liquid linear velocities allow the application of Taylor flow regime.

The principles of operation of a standard photocatalytic batch reactor are reported in Jaime Giménez, David Curco & Pilar Marco, *Water, Science & Technology,* Vol. 35, No. 4, pp. 207-213, (1997), which is hereby incorporated by reference. Specific characteristics and other details for the standard photocatalytic batch reactor used in this comparison may be found in J.M. Hermann, et al., *Applied Catalysis B: Environmental,* Vol. 35, pp. 281-294 (2002), which is hereby incorporated herein by reference. As one of skill in the art will readily appreciate from a review of the above-referenced publications, suspending photocatalytic material, in this case $TiO_2$, in water exhibits a maximum regarding its efficiency as a photocatalyst. Adding more than about 2.0 grams of $TiO_2$ per liter of solution treated does not further improve the reaction rate. Accordingly, the efficiency of a standard photocatalytic batch reactor is thus limited due to the fact that $TiO_2$ efficiency itself is limited. Due, at least in part, to the large volume to surface ratio within such a reactor, adding additional $TiO_2$ over 2.0 grams/liter of solution does not increase the amount of $TiO_2$ exposed to a actinic radiation in such reactors. Generally speaking, a significant number of the particles of $TiO_2$ exposed to the actinic radiation act as a screen which prevent the additional $TiO_2$ particles from being exposed to the actinic radiation.

In order to demonstrate that the photocatalytic reaction rate has improved by the present invention, the reaction described in the above-referenced publications was carried out in a microreactor manufactured in accordance with the present invention and having a single channel. The single channel of the exemplary microfluidic reactor of the present invention was rectangular in shape having a channel length of approximately 500.0 cm, a channel height of approximately 0.030 cm, and a channel width of approximately 0.05 cm. Utilizing a standard sputtering technique, a 0.002 cm thick layer of $TiO_2$ was deposited on 3 of the walls of the single channel of the microfluidic reactor. Assuming a density of 1 gram per cubic cm for the $TiO_2$ deposited layer, one of skill in the art can readily calculate the amount of deposited $TiO_2$, which is about 8.5 mg.

The volume of the single channel which is the available volume for the reaction to proceed within is equal to about 0.375 cubic cm. Due to the geometry of the microreactor, i.e. generally rectangular in shape with only 3 of the 4 walls coated with $TiO_2$, essentially all of the deposited photocatalytic material ($TiO_2$) is exposed to the ultra violet light through the 4th transparent wall. Thus, essentially all of the available $TiO_2$ within the microreactor will contribute to the photocatalytic reaction. On a microreactor volume basis, one of skill in the art can easily recognize that in the exemplary microreactor, the $TiO_2$ is about 8.5 mg or a volume of about 0.0085 cubic cm, which means that about 23 grams of $TiO_2$ per liter are available for the reaction to proceed. Thus, it is clear that the photocatalytic activity in the microreactor of a higher $TiO_2$ loading (23 grams per liter) than in the standard photocatalytic batch reactor (no more than 2 grams per liter). Accordingly, the photocatalytic reaction rate within the exemplary microreactor is dramatically improved over the photocatalytic reaction rate within the standard photocatalytic batch reactor.

It will be apparent to those skilled in the art that various modifications and variations can be made to the present invention without departing from the spirit and scope of the invention.

While the various systems and method of the present invention may have been shown and described with reference to specific embodiments of the present invention, any and all embodiments may be used in conjunction with any of the systems and methods described herein. Thus, it is intended that the present invention cover the modifications and variations of this invention provided they come within the scope of the appended claims and their equivalents.

**Claims**

1. A microfluidic reactor comprising:

   at least one reaction cell for a photocatalytic reaction comprising:

   at least one channel including an inlet port, an outlet port, and a surface transparent to actinic radiation; and
   a photoactive catalyst disposed within the at least one channel.

2. The microfluidic reactor of claim 1 wherein the inside diameter of the channel measures between about 10 microns to about 10,000 microns.

3. The microfluidic reactor of claim 1 or 2 wherein the catalyst comprises a semiconductor.

4. The microfluidic reactor of claim 3 wherein the semiconductor is selected from the group consisting of Cds, CdSe, $TiO_2$, $Fe_2O_3$, ZnO, ZnS, $WO_3$ and $SrTiO_3$.

5. The microfluidic reactor of any one of claims 1 to 4 wherein the surface transparent to actinic radiation comprises glass.

6. The microfluidic reactor of any one of claims 1 to 4 wherein the surface transparent to actinic radiation comprises quartz.

7. The microfluidic reactor of any one of claims 1 to 6 wherein the at least one reaction cell comprises a plurality of reaction cells and the channel comprises a plurality of channels, and wherein the plurality of channels are in fluid communication with one another.

8. The microfluidic reactor of any one of claims 1 to 7 wherein the channel further includes an internal surface and the photoactive catalyst is deposited on the internal surface.

9. The microfluidic reactor of any one of claims 1 to 8 wherein the at least one reaction cell further comprises a component.

10. A method of performing a reaction in a microfluidic reactor, the method comprising the steps of:

    introducing a reactant into a reaction cell channel housing a photoactive catalyst; and
    exposing the photoactive catalyst to actinic radiation while the reactant is in communication with the photoactive catalyst within the reaction cell channel.

11. The method of claim 10 wherein the reaction cell channel includes a surface transparent to actinic radiation, and wherein the exposing step comprises the step of radiating the photoactive catalyst through the surface transparent to actinic radiation with light having a wavelength of between about 290 nm and about 750 nm.

12. The method of claim 11 wherein the radiating step comprises the step of projecting UV light onto the photoactive catalyst through the surface transparent to actinic radiation.

13. The method of any one of claims 10 to 12 wherein the introducing step comprises the step of continuously flowing a reactant through the reaction cell channel during the exposing step.

14. The method of any one of claims 10 to 13 further comprising the step of depositing the photoactive catalyst on the internal surface of the reaction cell channel prior to the introducing step.

15. The method of claim 14 wherein the depositing step comprises the step of applying a semiconductor material onto the internal surface of the reaction cell channel via sputtering.

16. A microfluidic reactor system comprising:

   at least one reaction cell for a photocatalytic reaction, the at least one reaction cell including at least one channel having an inlet port, an outlet port, and a surface transparent to actinic radiation;
   a photoactive catalyst disposed within the at least one channel; and
   a source of actinic radiation positioned with respect to the reaction cell to communicate with the photoactive catalyst through the surface.

17. The microfluidic reactor system of claim 16 wherein the source of actinic radiation delivers light having a wavelength in the range from about 290 nm to about 750 nm.

18. The microfluidic reactor system of claim 16 or 17 wherein the surface transparent to actinic radiation comprises a transparent material selected from the group consisting of glass, quartz, and silica.

19. The microfluidic reactor system of any one of claims 16 to 18 wherein the at least one channel includes an internal surface oriented at an angle other than 90° with respect to the surface transparent to actinic radiation.

20. The microfluidic reactor system of any one of claims 16 to 19 wherein the at least one reaction cell comprises a plurality of reaction cells and the at least one channel comprises a plurality of channels.

21. The microfluidic reactor system of claim 20 wherein the plurality of reaction cells define at least one passage constructed and arranged to place the plurality of channels in fluid communication with one another.

FIG. 1

*FIG. 2*

*FIG. 3*

EP 1 415 707 A1

FIG. 4A

FIG. 4B

*FIG. 5*

FIG. 6

FIG. 7

*FIG. 8*

10'''''''

90    90    90    90    90    90    20'

30'    30'

46

26

*FIG. 9A*

*FIG. 9B*

**European Patent Office**

**EUROPEAN SEARCH REPORT**

Application Number

EP 02 29 2689

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 94 21372 A (DU PONT) 29 September 1994 (1994-09-29) * page 13, line 21 - line 25 * * page 30, line 5 - line 26 * * claims 31,35,37; figures 1,15 * --- | 1-6,8-18 | B01J19/00 |
| X | EP 1 203 954 A (INTEGRATED CHEMICAL SYNTHESIZE) 8 May 2002 (2002-05-08) * page 8, line 16 - line 19 * * page 9, line 1 - line 19 * ----- | 1-6,10, 13,16 | |

TECHNICAL FIELDS SEARCHED (Int.Cl.7)

B01J
B01L

The present search report has been drawn up for all claims

| Place of search | Date of completion of the search | Examiner |
|---|---|---|
| THE HAGUE | 17 April 2003 | Vlassis, M |

EPO FORM 1503 03.82 (P04C01)

## ANNEX TO THE EUROPEAN SEARCH REPORT
## ON EUROPEAN PATENT APPLICATION NO.

EP 02 29 2689

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2003

| Patent document cited in search report | | Publication date | Patent family member(s) | | Publication date |
|---|---|---|---|---|---|
| WO 9421372 | A | 29-09-1994 | US | 5534328 A | 09-07-1996 |
| | | | AU | 6409794 A | 11-10-1994 |
| | | | BR | 9405989 A | 26-12-1995 |
| | | | DE | 69413012 D1 | 08-10-1998 |
| | | | DE | 69413012 T2 | 25-03-1999 |
| | | | EP | 0688242 A1 | 27-12-1995 |
| | | | JP | 8508197 T | 03-09-1996 |
| | | | WO | 9421372 A1 | 29-09-1994 |
| | | | US | 5690763 A | 25-11-1997 |
| EP 1203954 | A | 08-05-2002 | US | 5580523 A | 03-12-1996 |
| | | | EP | 1203954 A2 | 08-05-2002 |
| | | | AT | 221408 T | 15-08-2002 |
| | | | AU | 708281 B2 | 29-07-1999 |
| | | | AU | 2200195 A | 23-10-1995 |
| | | | CA | 2186896 A1 | 12-10-1995 |
| | | | DE | 69527613 D1 | 05-09-2002 |
| | | | DE | 69527613 T2 | 10-04-2003 |
| | | | EP | 0754084 A1 | 22-01-1997 |
| | | | JP | 10501167 T | 03-02-1998 |
| | | | WO | 9526796 A1 | 12-10-1995 |

EPO FORM P0459

For more details about this annex : see Official Journal of the European Patent Office, No. 12/82